# EUROPÄISCHE PATENTSCHRIFT

(11) **EP 0 602 390 B1**
(45) Veröffentlichungstag und Bekanntmachung des Hinweises auf die Patenterteilung: **17.01.1996**
(21) Anmeldenummer: 93118254.7
(22) Anmeldetag: 11.11.1993
(51) Int. Cl.: B60R 9/045

(54) **Querträger für Dachlasten an einem mit einer Dachreling ausgestatteten Kraftwagen**
Cross-bar for the roof-rack of a vehicle provided with slats
Traverse de galerie pour le toit d'un véhicule équipé de rails

(30) Priorität: 15.12.1992 DE 4242207
(43) Veröffentlichungstag der Anmeldung: 22.06.1994
(73) Patentinhaber: Happich Fahrzeug-Dachsysteme GmbH, D-42285 Wuppertal (DE)
(72) Erfinder: Kauka, Christof, D-47623 Kevelaer (DE); Mieglitz, Hans-Helmut, D-40789 Monheim (DE); Reinl, Werner, D-41069 Mönchengladbach (DE); Krebs, Hans Ulrich, D-45549 Sprockhövel (DE)

(56) Entgegenhaltungen:
- DE-A- 3 104 163
- DE-A- 3 516 483
- DE-U- 9 015 530
- GB-A- 690 148
- PATENT ABSTRACTS OF JAPAN vol. 14, no. 196 (M-964)(4169) 20. April 1990 & JP-A-02 038 158 (KOKUSAN KINKOZU KOGYO CO LTD) 7. Februar 1990

## Beschreibung

Die Erfindung bezieht sich auf einen Querträger für Dachlasten an einem mit einer Dachreling ausgestatteten Kraftwagen, der an jedem Endbereich ein Halteelement mit zwei durch ein Spannorgan gegeneinanderziehbare Klemmbacken zur Befestigung an den Holmen der Dachreling trägt, wobei jedes Halteelement in zumindest einer Klemmbacke eine Ausnehmung mit wenigstens einer darin angeordneten, am Holm abstützbaren Reibungsbremse aufweist, die aus einem Formkörper aus Hartgummi oder aus verschleißfestem, zähelastischen Kunststoffmaterial besteht.

Das Dokument DE-U- 90 15 530, von dem die Erfindung ausgeht, beschreibt einen Lastträger für ein Fahrzeug mit Dachreling, mit zwei an den Relingstangen zu befestigenden Haltern und einer durch Querkanäle der Halter hindurchgehenden Querstange, wobei jeder Halter zwei durch ein Spannorgan gegeneinanderziehbare Klemmbacken aufweist und die Querstange an dem Halter durch Klemmung fixierbar ist. Um den Lastträger auf einfache Weise schnell auf den jeweiligen Fahrzeugtyp einzurichten und an der Dachreling zu montieren, ist vorgesehen, daß mindestens ein Klemmbacken in dem Halter ein solches Spiel hat, daß er unter Verkantung mit einer längslaufenden Außenkante über den Boden des Querkanals hinaus vordringen kann und daß das Spannorgan zwischen dem Aufnahmebereich für die Relingstange und dem Querkanal verläuft, derart, daß durch das Spannen des Spannorgans sowohl die Relingstange einklemmbar als auch die Querstange an dem Halter festklemmbar ist. Darüber hinaus ist im Dokument DE-U- 90 15 530 offenbart, daß die aus dem Grundkörper des Halters nach unten herausragenden Teile der Klemmbacken jeweils eine Ausnehmung mit einem darin angeordneten Elastomerpolster enthalten, mit denen die Klemmbacken seitlich gegen die Relinstange drücken.

Bei einem anderen, durch das Dokument DE-U- 81 36 129 bekanntgewordenen Querträger wird eine Haftkraft durch Anziehen von Spannschrauben erzeugt, die die Klemmbacken eines Halteelements unter Einschluß des jeweiligen Holms aneinanderziehen. Hierbei ist nachteilig, daß ein zu hoher Spanndruck zu einer Deformation der Holmoberfläche (Kerbwirkung) oder auch bis zum Bruch der Klemmbacken führen kann, während ein zu niedriger Spanndruck zur Folge haben kann, daß der Querträger nebst Dachlast bei starker Verzögerung des Fahrzeugs in Fahrzeuglängsrichtung verrutscht, was weitaus schwerwiegender sein kann.

Zum Stand der Technik gehört z.B. auch die sich nicht unmittelbar auf einen Querträger der gattungsgemäßen Art beziehende DE 33 01 706 A1, in der gezeigt ist, daß ein mit Tragfüßen und Klemmlaschen versehener Dachgepäckträger an beidseitig im Bereich der Oberkante des Fahrzeugdachs eines Kraftfährzeugs verlaufenden Regenrinnen befestigbar ist. Um zu verhindern, daß der Dachgepäckträger bei einer Vollbremsung oder bei einer Kollision des Fahrzeugs mit einem anderen Fahrzeug oder mit einem Hindernis über die Regenrinnen hinausrutscht, ist bei dieser bekannten Konstruktion vorgesehen, daß an den Regenrinnen Anschlagmittel vorgesehen sind zur Begrenzung einer Verlagerung des Gepäckträgers in Fahrzeuglängsrichtung.

Ein anderer bekannter Dachgepäckträger für ein Kraftfahrzeug (DE 33 01 705 A1), der sich mit Tragfüßen in den im Bereich der Oberkante des Fahrzeugdaches beidseitig verlaufenden Regerinnen abstüzt und der über Klemmlaschen, die die Regenrinnen untergreifen und gegen die Tragfüße verspannbar sind, am Kraftfahrzeug befestigbar ist, soll so gestaltet sein, daß er auch im Falle einer starken Verzögerung oder Beschleunigung des Kraftfahrzeugs sicher auf dem Kraftfahrzeugdach gehalten ist. Zu diesem Zweck sind an dem Dachgepäckträger zwischen ihm und den Regenrinnen wirksam werdende Blockiermittel vorgesehen, die die Vorverlagerung des Dachgepäckträgers in Fahrzeuglängsrichtung verhindern.

Der vorliegenden Erfindung liegt nun die Aufgabe zugrunde, bei einem Querträger der eingangs genannten Art, der auf einer Dachreling aufspannbar ist, die Gefahr des Verrutschens bei starker Beschleunigung/Verzögerung wesentlich zu mindern.

Diese Aufgabe wird erfindungsgemäß dadurch gelöst, daß zwei Formkörper als Reibungsbremsen vorgesehen sind, daß jeder Formkörper in einer länglichen, parallel zum Holm verlaufenden Ausnehmung mit einer schrägen, eine schiefe Ebene bildenden Bodenfläche angeordnet ist und daß jeder Formkörper auf der Bodenfläche der Ausnehmung verschiebbar oder abrollbar angeordnet ist. Durch diese Maßnahme wird bei einer extremen Verzögerung/Beschleunigung eine Verstärkung des Kraftschlusses über die Reibungsbremselemente unter Nutzung der einen Verschub der Elemente bewirkenden schiefen Ebene erreicht. Bei besonders extremer Verzögerung/Beschleunigung, wie sie bei einem z.B. Auffahrunfall eintreten kann, besteht die Möglichkeit, daß sich die Formkörper der Reibungsbremse in die Holme der Dachreling einprägen und zusätzlich zum erhöhten Kraftschluß einen Formschluß erzeugen.

Eine Reibungsbremse, die aus einem Formkörper aus Hartgummi oder verschleißfestem zähelastischem Kunststoff besteht, ist verständlicherweise relativ einfach und kostengünstig herzustellen, selbst dann, wenn hochwertiges, verschleißarmes Material zum Einsatz gelangt. Eine solche Reibungsbremse weist zudem den wesentlichen Vorteil auf, das sie auf Dauer völlig wartungs- und störungsfrei zu Arbeiten vermag. Die Reibungsbremse gewährleistet ein sicheres Haften der Halteelemente an den Holmen der Dachreling, insbesondere auch nach Minderung der Vorspannung beim Setzen des Materials oder beim zu niedrigen Spannen der Klemmbacken.

Im einzelnen kann noch vorgesehen sein, daß für zwei Formkörper nur eine Ausnehmung mit einer länglichen, parallel zum Holm verlaufenden Bodenfläche vorgesehen ist, die von der dem Holm eng benachbarten Mitte zu den Enden hin abfällt. Dabei kann die Bodenfläche der Ausnehmung eine reibungsmindernde Beschichtung aufweisen, was die Gleitfähigkeit der Formkörper erhöht und besonders dann sinnvoll ist, wenn der bzw. jeder Formkörper keilartig ausgebildet ist.

Der bzw. jeder der eine Reibungsbremse bildenden Formkörper kann auch als Rolle ausgebildet sein und auf der erwähnten schiefen Ebene abrollen. In diesem Fall kann noch ergänzend vorgesehen werden, daß der bzw. jeder als Rolle ausgebildeter Formkörper auf eine Achse mit überstehenden Achszapfen angeordnet ist und daß die Achszapfen in einander gegenüberliegenden Kulissennuten, die in den Ausnehmungswangen eingearbeitet sind, eingreifen.

Ausführungsbeispiele der Erfindung werden nachfolgend anhand der Zeichnung näher erläutert. Es zeigen:
- Fig. 1: eine Dachreling mit Stützfüßen, Galeriestäben und Querträgern,
- Fig. 2: einen Vertikalschnitt durch ein an einem Galeriestab befestigtes Halteelement eines Querträgers gemäß einer ersten Ausführungsform,
- Fig. 3: einen Schnitt III - III nach Fig. 2,
- Fig. 4: einen Vertikalschnitt durch ein an einem Galeriestab befestigtes Halteelement eines Querträgers gemäß einer zweiten Ausführungsform und
- Fig. 5: einen Schnitt V - V nach Fig. 4.

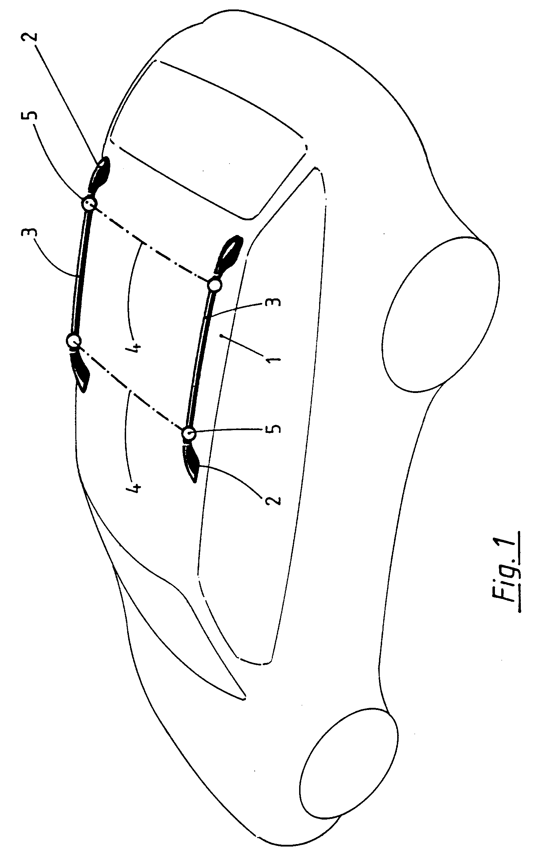

Fig. 1 läßt das Dachblech 1 eines Fahrzeugs mit einem darauf angeordneten Dachlastenträger erkennen. Der Dachlastenträger wird aus zwei Dachrelings, bestehend aus Stützfüßen 2, Galeriestäben (Holme 3) sowie aus lediglich strichpunktiert angedeuteten Querträgern 4, die mittels Halteelementen 5 an den Holmen 3 befestigt sind, gebildet. Die Dachrelings erstrecken sich zumindest annähernd parallel zueinander und verlaufen in Fahrtrichtung des Fahrzeugs.

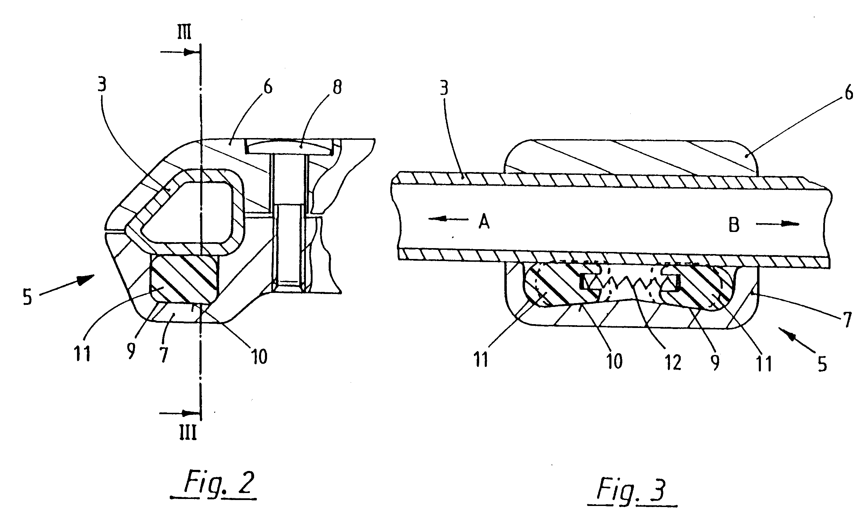

Das neue Halteelement 5 ist in einer ersten Ausführungsform aus Fig. 2 und 3 näher ersichtbar. Das Halteelement 5 ist in herkömmlicher und daher nicht näher dargestellter Weise an den Enden der Querträger 4 angeordnet und besteht aus einer ersten (oberen) Klemmbacke 6 und einer zweiten (unteren) Klemmbacke 7. Die Klemmbacke 6 umgreift den Holm 3 bereichsweise von oben und die Klemmbacke 7 den Holm 3 bereichsweise von unten her. Die zwei Klemmbacken 6 und 7 sind durch ein Spannorgan 8 unter Einspannen des Holms 3 gegeneinanderziehbar.

In der unteren Klemmbacke 7 ist eine längliche, parallel zum Holm 3 verlaufende und nur zum Holm 3 hin offene Ausnehmung 9 ausgebildet. Die Bodenfläche 10 ist in der Mitte ihrer Längserstreckung dem Holm 3 am engsten benachbart und fällt von dieser Mitte zu den Ausnehmungsenden hin kontinuierlich ab. Die Bodenfläche 10 weist somit zwei Schiefe Ebenen auf. Auf jeder dieser schiefen Ebenen ist ein als Reibungsbremse dienender Formkörper 11 aufgesetzt, der mit seiner gegenüberliegenden Seite reibschlüssig am Holm 3 zur Anlage gelangt. Die im Ausführungsbeispiel nach Fig. 2 und 3 als Keile ausgebildeten Formkörper 11 sind jeweils kürzer als die ihnen als Auflage- und Gleitfläche zugedachte schiefe Ebene und können in ihrer in Fig. 3 gezeigten Normallage durch eine Druckfeder 12 auf Distanz gehalten werden. Die Normallage der Formkörper 11 ist mit stark ausgezogenen Linien und die Position der Formkörper 11 unter Brems-/Beschleunigungsverschub ist mit gestrichelten Linien dargestellt. Bei einer Beschleunigungsrichtung gemäß Pfeil A wird sich der rechte Formkörper 11 nach Fig. 3 in eben diese Pfeilrichtung A bewegen und dabei unter Erhöhung des Anpreßdrucks (Kraftschlusses) gegen den Holm 3 auf der schiefen Ebene gleiten. Bei einer Beschleunigungsrichtung gemäß Pfeil B wird der in Fig. 3 links dargestellte Formkörper 11 in eben diese Pfeilrichtung B bewegt. Die Wirkung der Bremselemente ist um so effektiver je höher der Kraftschluß zwischen den Formkörpern 11 und den Holmen 3 bzw. je geringer der Kraftschluß zwischen den Formkörpern 11 und den Bodenflächen 10 der Ausnehmung 9 ist. Es empfiehlt sich daher, die Bodenfläche 10 mit einer reibungsmindernden Beschichtung zu versehen. Andererseits können alternativ oder zusätzlich reibungserhöhende Maßnahmen an den Flächen der Formkörper 11, die mit den Holmen 3 in Reibkontakt kommen, vorgesehen werden, und zwar in Form von Aufrauhungen, Antirutschbeschichtungen od. dgl..

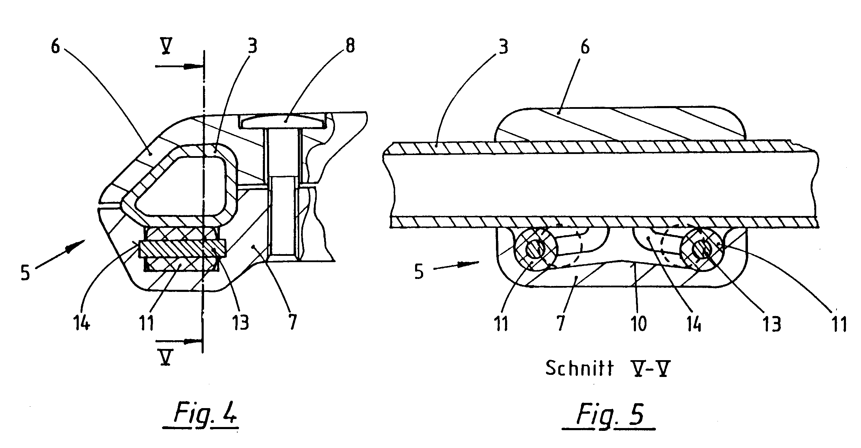

Beim Ausführungsbeispiel nach Fig. 4 und 5 ist ein wirktechnisch mit dem nach Fig. 2 und 3 vergleichbares Lösungsprinzip vorgesehen. Demgemäß besteht das Halteelement 5 auch hier aus einer oberen Klemmbacke 6, eine unteren Klemmbacke 7 und einem Spannorgan 8 zum Festklemmen der Klemmbacken 6 und 7 auf einem Holm 3. Eine der Klemmbacken, nämlich die untere Klemmbacke 7 weist eine Ausnehmung 9 auf, wie sie schon anhand des vorherigen Ausführungsbeispiels beschrieben wurde. Ein Unterschied besteht im wesentlichen darin, daß die Formkörper 11 nicht als Keile sondern in Form von Rollen ausgebildet sind. Dabei können die Rollen, wie dargestellt, mit zentrischen Achsen 13 ausgebildet sein, die mit Achszapfen aus den Rollenstirnenden heraustreten. Für jeden Achszapfen ist in einander gegenüberliegenden Seitenwangen der Ausnehmung 9 eine Kulissennut 14 eingearbeitet.

Die Rollen bestehen aus dem gleichen Material wie die vorbeschriebenen Formkörper 11, also z.B. aus Hartgummi, während die Achsen 13 zweckmäßigerweise aus Stahl gebildet sind. Die Bremsrichtung der als Rollen ausgebildeten Formkörper 11 entspricht der der Formkörper 11 die als Keile ausgebildet sind. Anstelle einer Gleitbewegung für die Formkörper 11 nach Fig. 2 und 3 tritt eine Rollbewegung für die Formkörper 11 nach Fig. 4 und 5, unter Umständen aber auch eine kombinierte Roll-/Gleitbewegung. Wichtig ist, daß bei extremer Verzögerung/Beschleunigung eine Verstärkung des Kraftschlusses über die Formkörper 11 gegenüber den Holmen 3 erreicht wird.

## Patentansprüche

1. Querträger für Dachlasten an einem mit einer Dachreling ausgestatteten Kraftwagen, der an jedem Endbereich ein Halteelement (5) mit zwei durch ein Spannorgan (8) gegeneinanderziehbare Klemmbacken (6, 7) zur Befestigung an den Holmen (3) der Dachreling trägt, wobei jedes Halteelement (5) in zumindest einer Klemmbacke (6, 7) eine Ausnehmung (9) mit wenigstens einer darin angeordneten, am Holm (3) abstützbaren Reibungsbremse aufweist, die aus einem Formkörper (11) aus Hartgummi oder aus verschleißfestem, zähelastischem Kunststoffmaterial besteht, dadurch gekennzeichnet, daß zwei Formkörper (11) als Reibungsbremsen vorgesehen sind, daß jeder Formkörper (11) in einer länglichen, parallel zum Holm (3) verlaufenden Ausnehmung (9) mit einer schrägen, eine schiefe Ebene bildenden Bodenfläche (10) angeordnet ist und daß jeder Formkörper (11) auf der Bodenfläche (10) der Ausnehmung (9) verschiebbar oder abrollbar angeordnet ist.

2. Querträger nach Anspruch 1, dadurch gekennzeichnet, daß für zwei Formkörper (11) nur eine Ausnehmung (9) mit einer länglichen, parallel zum Holm (3) verlaufenden Bodenfläche (10) vorgesehen ist, die von der dem Holm (3) eng benachbarten Mitte zu den Enden hin abfällt.

3. Querträger nach einem der Ansprüche 1 oder 2, dadurch gekennzeichnet, daß die Bodenfläche (10) der Ausnehmung (9) eine reibungsmindernde Beschichtung aufweist.

4. Querträger nach wenigstens einem der Ansprüche 1 bis 3, dadurch gekennzeichnet, daß der bzw. jeder Formkörper (11) keilartig ausgebildet ist.

5. Querträger nach wenigstens einem der Ansprüche 1 bis 3, dadurch gekennzeichnet, daß der bzw. jeder Formkörper (11) als Rolle ausgebildet ist.

6. Querträger nach Anspruch 5, dadurch gekennzeichnet, daß der bzw. jeder als Rolle ausgebildeter Formkörper (11) auf einer Achse (13) mit überstehenden Achszapfen angeordnet ist und daß die Achszapfen in einander gegenüberliegenden Kulissennuten (14), die in den Ausnehmungswangen eingearbeitet sind, eingreifen.

## Claims

1. Cross-beam for roof loads on a motor car equipped with a roof railing, which cross-beam supports at each end region a holding element (5) having two clamping jaws (6, 7), which can be drawn towards each other by a clamping member (8), for fastening to the bars (3) of the roof railing, each holding element (5) having, in at least one clamping jaw (6, 7), a recess (9) having at least one friction brake which is disposed therein, is supportable against the bar (3) and comprises a moulded body (11) made from hard rubber or from wear-resistant, ductile synthetic material, characterized in that two moulded bodies (11) are provided as friction brakes, in that each moulded body (11) is disposed in an elongated recess (9) running parallel to the bar (3) and having a diagonal bottom face (10) forming an oblique plane, and in that each moulded body (11) is disposed such that it can be displaced or rolled on the bottom face (10) of the recess (9).

2. Cross-beam according to Claim 1, characterized in that for two moulded bodies (11) there is provided just one recess (9) having an elongated bottom face (10) which runs parallel to the bar (3) and tapers from the centre, lying closely adjacent to the bar (3), in the direction of the ends.

3. Cross-beam according to one of Claims 1 or 2, characterized in that the bottom face (10) of the recess (9) has a friction-reducing coating.

4. Cross-beam according to at least one of Claims 1 to 3, characterized in that the or each moulded body (11) is configured like a wedge.

5. Cross-beam according to at least one of Claims 1 to 3, characterized in that the or each moulded body (11) is configured as a roller.

6. Cross-beam according to Claim 5, characterized in that the or each moulded body (11) configured as a roller is disposed on an axle (13) having protruding axle journals, and in that the axle journals engage in mutually opposite link grooves (14) which are made in the cheeks of the recess.

## Revendications

1. Traverse de galerie sur un véhicule dont le toit est équipé d'une galerie, portant à chaque zone d'extrémité un élément de maintien (5) avec deux mâchoires de serrage (6, 7) pouvant être serrées l'une contre l'autre au moyen d'un organe de serrage (8), pour assurer la fixation sur les longerons (3) des rails de galerie, chaque élément de maintien (5) présentant, dans au moins une mâchoire de serrage (6, 7), un évidement (9) avec au moins un frein à friction, disposé à l'intérieur et pouvant prendre appui sur le longeron (3), le frein à friction étant constitué d'un corps moulé (11), en caoutchouc dur ou en un matériau synthétique viscoplastique résistant à l'usure, caractérisée en ce que deux corps moulés (11) sont prévus à titre de freins à friction, en ce que chaque corps moulé (11) est disposé dans un évidement (9) allongé, s'étendant parallèlement au longeron (3), avec une face de fond (10) oblique, constituant un plan incliné, et chaque corps moulé (11) étant disposé de façon à pouvoir être déplacé, par coulissement ou par roulement, sur la face de fond (10) de l'évidement (9).

2. Traverse selon la revendication 1, caractérisée en ce qu'est prévu pour deux corps moulés (11) seulement un évidement (9) avec une face de fond (10) allongée, s'étendant parallèlement au longeron (3) et allant en descendant, vers les extrémités, en partant du centre qui est situé très près du longeron (3).

3. Traverse selon l'une des revendications 1 ou 2, caractérisée en ce que la face de fond (10) de l'évidement (9) présente un revêtement diminuant le frottement.

4. Traverse selon au moins l'une des revendications 1 à 3, caractérisée en ce que le ou chaque corps moulé (11) est de configuration cunéiforme.

5. Traverse selon au moins l'une des revendications 1 à 3, caractérisée en ce que le, ou chaque corps moulé (11) est réalisé sous forme de galet.

6. Traverse selon la revendication 5, caractérisée en ce que le, ou chaque, corps moulé (11) réalisé sous forme de galet est disposé sur un axe (13), avec des tourillons d'axe en faisant saillie, et en ce que les tourillons d'axe s'engagent dans des rainures de coulissement (14) opposées, usinées dans les joues de l'évidement.
